# FASCICULE DE BREVET EUROPEEN

(11) **EP 2 151 587 B1**
(45) Date de publication et mention de la délivrance du brevet: **30.03.2016**
(21) Numéro de dépôt: 09167262.6
(22) Date de dépôt: 05.08.2009
(51) Int. Cl.: F15B 13/08

(54) **Dispositif isolateur de pression**
Druckdämpfungsvorrichtung
Pressure insulating device

(30) Priorité: 08.08.2008 FR 0804530
(43) Date de publication de la demande: 10.02.2010
(73) Titulaire: Asco Joucomatic, 92500 Rueil Malmaison (FR)
(72) Inventeur: Castelas, Pascal, 28630 Thivars (FR); Libet, Jacques, 92500 Rueil Malmaison (FR)
(74) Mandataire: Nony

(56) Documents cités:
- EP-A- 1 780 421
- WO-A-00/50793
- JP-A- 10 038 119
- US-A1- 2004 159 356

## Description

La présente invention est relative à un ensemble de distribution pneumatique ou électropneumatique comprenant au moins un distributeur pneumatique ou électropneumatique monté sur une embase de distribution.

Le contexte de l'invention est celui des automatismes pneumatiques pour l'industrie manufacturière et les industries de procédés..Plusieurs , distributeurs sont généralement montés sur une même embase (voir EP 1780421). En cas de défaillance d'un distributeur, il est souvent nécessaire d'arrêter l'ensemble des distributeurs installés sur la même embase de manière à pouvoir la mettre à la pression atmosphérique, et à permettre ainsi le remplacement du distributeur.

Cette manière de procéder engendre donc des arrêts de la chaîne de production et les coûts afférents sont importants.

Par ailleurs de tels distributeurs peuvent être utilisés pour commander des dispositifs sensibles dont le fonctionnement doit être garanti. Il est alors nécessaire de s'assurer qu'une éventuelle désactivation d'un distributeur ne peut être effectuée que par des personnes ayant les habilitations et les qualifications requises.

L'invention a pour but, surtout, de proposer un dispositif permettant d'isoler localement un distributeur pneumatique ou électropneumatique défaillant, sans que l'ensemble de l'installation automatisée soit mise à l'arrêt avec l'obligation de mise à la pression atmosphérique de celle ci. Ceci permet une mise en marche dégradée de l'installation automatisée, et une opération de maintenance ponctuelle en toute sécurité et sans mise en arrêt total de l'installation de process ou de la machine. L'isolation réalisée ne devrait pas pouvoir être mise en oeuvre par inadvertance, malveillance ou suite à une mauvaise compréhension du système par une personne non-habilitée.

Selon l'invention, un ensemble de distribution pneumatique ou électropneumatique comprenant au moins un distributeur pneumatique ou électropneumatique monté sur une embase de distribution, est caractérisé en ce qu'il comprend au moins un dispositif isolateur de pression apte à isoler la pression d'alimentation du distributeur pneumatique de l'embase, un dispositif de verrouillage étant prévu pour bloquer le dispositif isolateur de pression en position ouverte ou en position fermée. L'isolateur de pression peut aussi permettre, lorsque l'isolation est effective, la mise à l'échappement d'un ou des orifices d'utilisation, du distributeur.

Le dispositif de blocage est constitué d'une plaque, guidée en translation par rapport au corps, comprenant un doigt apte à coopérer avec des logements prévus sur la commande.

Avantageusement, le dispositif isolateur de pression comporte un corps, une face de distribution apte à être reliée au distributeur pneumatique, une face d'alimentation apte à être reliée à l'embase d'alimentation et un élément d'obturation apte à occuper une position ouverte où la face de distribution est en communication fluide avec la face d'alimentation, et une position fermée où la face de distribution n'est pas en communication fluide avec la face d'alimentation.

L'élément d'obturation peut être une sphère traversée par un orifice cylindrique apte à pivoter autour d'un axe orthogonal à l'axe de l'orifice cylindrique.

La surface latérale de l'élément d'obturation peut comporter une fente apte à coopérer avec une commande montée pivotante par rapport au corps.

L'élément d'obturation peut comporter un conduit d'échappement apte, lorsque le dispositif isolateur de pression est en position fermée, à mettre en communication le ou les orifices d'utilisation de la face d'alimentation avec une sortie d'échappement.

La plaque peut comprendre une ouverture permettant la pose d'un dispositif de sécurité.

D'autres caractéristiques et avantages de l'invention apparaîtront dans la description qui suit d'un mode de réalisation préféré avec référence aux dessins annexés mais qui n'a aucun caractère limitatif. Sur ces dessins :
Fig. 1 est une vue de face représentant un ensemble de distribution, selon l'invention, avec ici pour l'exemple, trois distributeurs pneumatiques, et dispositifs d'isolation montés côte à côte sur l'embase.
Fig. 2 est une vue latérale, à plus grande échelle avec parties arrachées, montrant un dispositif isolateur de pression selon l'invention.
Fig. 3 est une vue côté gauche par rapport à Fig. 2, à plus petite échelle.
Fig. 4 est une vue de dessus du dispositif de Fig. 3.
Fig. 5 est une vue en bout à plus grande échelle d'une commande adaptée à un dispositif isolateur de pression selon l'invention.
Fig. 6 est une vue en élévation latérale de la commande de Fig. 5, et
Fig. 7 est une vue en bout, d'un dispositif de blocage adapté à un dispositif isolateur de pression selon l'invention, le dispositif de blocage étant incliné de 90° dans le sens horaire.

Dans toute la description qui suit d'un mode de réalisation d'un dispositif selon l'invention, les termes relatifs tels que « supérieur », « inférieur », « avant », « arrière », « horizontal » et « vertical » sont à interpréter lorsque le dispositif D selon l'invention est installé entre une embase 1 et un distributeur 2, en situation de fonctionnement.

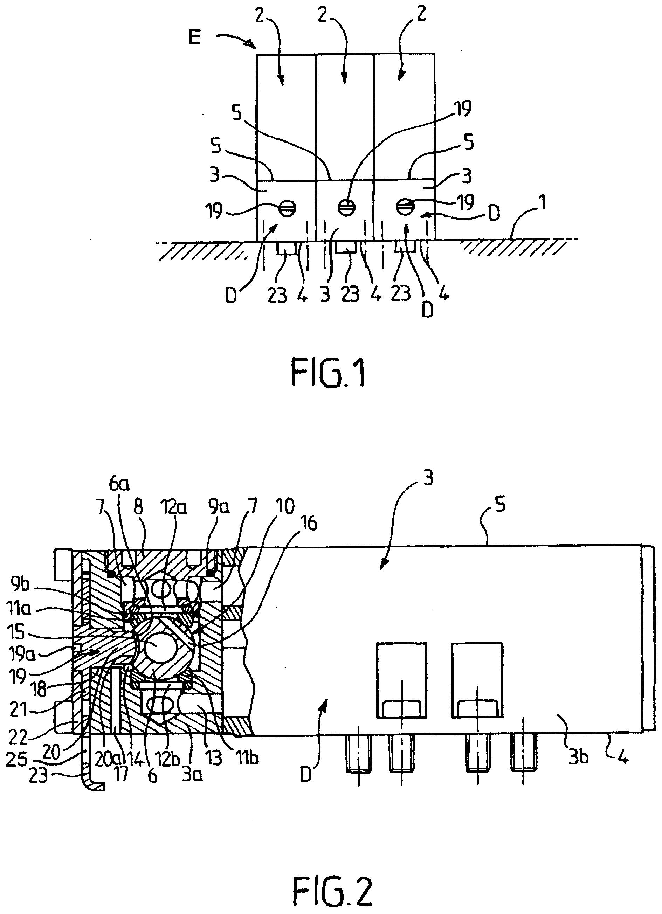

On peut voir sur Fig. 1 un ensemble de distribution pneumatique E comprenant une embase 1 de distribution sur laquelle sont montés par exemple trois distributeurs pneumatiques 2, ou électropneumatiques, comprenant chacun un dispositif isolateur de pression D selon l'invention.

En variante, les distributeurs peuvent être montés dans un ilot de distribution, formé par un ensemble de distributeurs placés sur des embases communes.

Chaque distributeur 2 est alimenté en pression par l'intermédiaire du dispositif isolateur D sur lequel il est monté.

Il est visible sur Fig. 2 que le dispositif isolateur D comporte un corps 3 en deux parties. Le corps 3, de forme sensiblement parallélépipédique, comporte une face inférieure formant face d'alimentation 4 et une face supérieure formant une face de distribution 5.

Une première partie 3a située en partie avant comprend un élément d'obturation 6 apte à occuper une position ouverte où la face de distribution 5 est en communication fluide avec la face d'alimentation 4, et une position fermée où la face de distribution 5 n'est pas en communication fluide avec la face d'alimentation 4.

Une seconde partie 3b située en partie arrière assure la communication fluide avec l'embase 1 et le distributeur 2.

Dans la partie supérieure de la première partie 3a, une chambre d'admission 7, fermée par un bouchon 8, est ménagée.

Le bouchon 8 est partiellement évidé et l'évidement ainsi créé prolonge la chambre d'admission 7. Des joints 9a et 9b sont prévus pour assurer l'étanchéité entre le bouchon 8 et le corps 3.

Sous le bouchon 8, un logement 10 reçoit l'élément d'obturation 6 de forme sphérique. Un siège supérieur 11a est interposé entre le bouchon 8 et l'élément d'obturation 6. Le siège supérieur 11a comporte une face supérieure plane sur laquelle s'exerce l'effort d'un ressort hélicoïdal 12a, dont l'unique spire est représentée écrasée Fig. 2, prenant appui sur le bouchon 8. Le siège supérieur 11a comporte une face inférieure sphérique assurant un contact surfacique avec l'élément d'obturation.

Un siège inférieur 11b est interposé entre l'élément d'obturation 6 et le fond de logement 10. Le siège inférieur 11 b comporte une face supérieure sphérique assurant un contact surfacique avec l'élément d'obturation 6. Le siège inférieur 11b comporte également une face inférieure plane sur laquelle s'exerce l'effort d'un ressort hélicoïdal 12b, ne comportant qu'une seule spire, prenant appui sur le corps 3.

Les sièges 11a et 11 b sont percés en leur milieu de manière à permettre le passage du fluide vers et à partir de l'élément d'obturation 6.

Sous le siège inférieur 11 b, un orifice de sortie 13 est prévu.

La zone du logement 10 située entre les sièges 11 a et 11 b, à l'extérieur de l'élément d'obturation 6, forme une chambre d'échappement 14.

L'élément d'obturation 6 est traversé par un canal 15 dont l'axe passe par le centre géométrique de la sphère formée par la surface de l'élément d'obturation 6. Le canal 15, lorsque son axe est vertical, met en relation la chambre d'admission 7 et l'orifice de sortie 13.

L'élément d'obturation 6 comporte également un conduit d'échappement 16 d'axe orthogonal à l'axe du canal 15. Le conduit 16 et le canal 15 ne sont pas sécants. Lorsque l'axe du conduit 16 se trouve dans un plan vertical, le conduit 16 met en relation la chambre d'admission 7 et la chambre d'échappement 14. La chambre d'échappement communique avec un orifice d'échappement 17. Le conduit 16 présente une section transversale suffisamment réduite pour assurer une mise à l'échappement progressive du circuit aval commandé par le distributeur ou électro-distributeur.

Le corps 3 comporte un alésage 18 dont l'axe passe par le centre géométrique de la sphère formée par la surface de l'élément d'obturation 6.

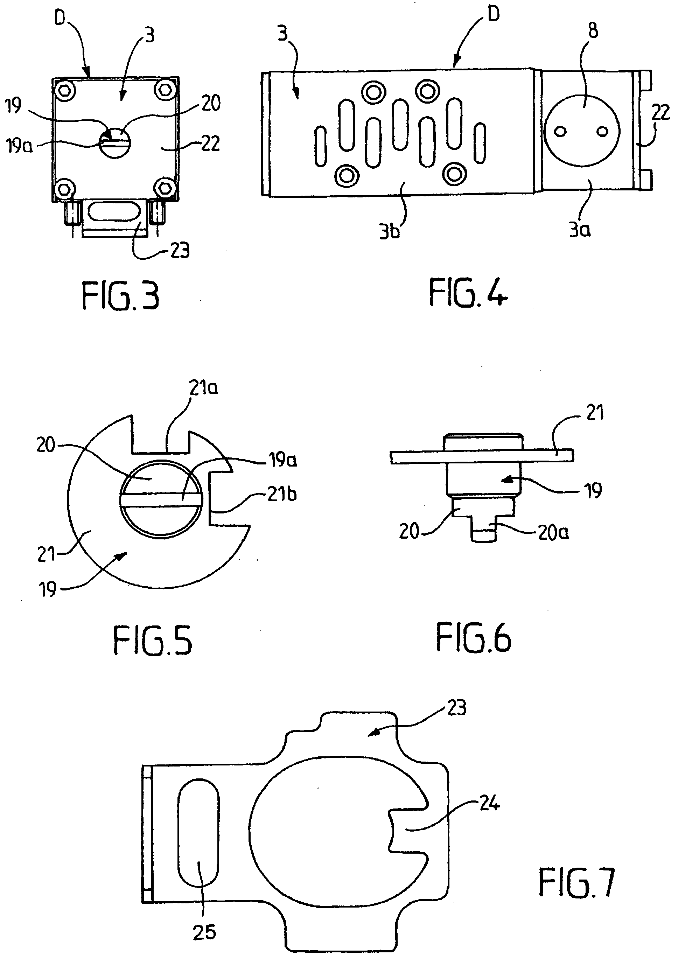

Une commande 19 comportant un doigt cylindrique 20 est logée dans l'alésage 18. L'extrémité du doigt 20 comporte deux dégagements pour former un tenon 20a (Fig. 6) qui pénètre dans une rainure 6a prévue dans l'élément d'obturation 6.

La surface extérieure de la commande 19 comporte une rainure 19a permettant de faire pivoter la commande 19 à l'aide d'un outil du type tournevis. La commande 19 comporte également au voisinage de sa surface extérieure un plateau 21 orthogonal à l'axe géométrique du doigt 20. La périphérie du plateau 21 comporte deux encoches 21a et 21b (Fig. 5) formant un angle de 90° l'une par rapport à l'autre. Un capot 22 est prévu pour maintenir la commande 19 en place de sorte que seules l'extrémité extérieure de la commande 19 et la rainure 19a sont visibles.

Une plaque de verrouillage 23 est également présente sous le capot 22. La plaque de verrouillage 23 est évidée et traversée par la commande 19. Un doigt 24 s'étend vers l'intérieur de l'évidemment et pénètre dans l'une des encoches 21 a, 21 b.

En fonctionnement, en cas de défaillance du distributeur 2, l'action d'un opérateur sur la fente 19a de la commande 19 permet de faire pivoter le doigt 20 entraînant la rotation de l'élément d'obturation 6 par l'intermédiaire de la coopération entre le tenon 20a et la rainure 6a.

La commande 19 permet de supprimer la communication entre la chambre d'admission 7 et l'orifice de sortie 13 par l'intermédiaire du canal 15.

Le distributeur 2, monté sur le dispositif isolateur de pression D sur lequel a agi l'opérateur, se trouve alors isolé de l'embase 1. Il est alors possible de remplacer le distributeur 2 défaillant, l'embase 1 restant sous pression et permettant d'assurer le fonctionnement des autres distributeurs montés sur ladite embase1.

La translation de la plaque 23 permet d'engager le doigt 24 dans l'une des encoches 21a, 21 b pour bloquer la rotation du plateau 21 et par là de la commande 19 évitant toute action intempestive sur la commande 19.

La plaque 23 comporte une ouverture 25 en partie basse qui permet de mettre en place un dispositif de bocage, par exemple un cadenas, pour ainsi interdire tout mouvement de la plaque 23 et donc le déblocage de la commande 19. De cette façon l'isolation réalisée peut difficilement être mise en oeuvre par inadvertance, malveillance ou suite à une mauvaise compréhension du système par une personne non-habilitée.

## Revendications

1. Ensemble de distribution pneumatique ou électropneumatique (E) comprenant au moins un distributeur pneumatique ou électropneumatique (2) monté sur une embase de distribution (1), comprenant au moins un dispositif isolateur de pression (D) apte à isoler la pression d'alimentation du distributeur (2) de l'embase (1), **caractérisé en ce qu'**un dispositif de verrouillage (23) est prévu pour bloquer le dispositif isolateur de pression (D) en position ouverte ou en position fermée, le dispositif de blocage étant constitué d'une plaque (23), guidée en translation par rapport au corps (3), comprenant un doigt (24) apte à coopérer avec des logements (21 a, 21 b) prévus sur la commande (19).

2. Dispositif isolateur de pression (D) pour ensemble selon la revendication 1 , **caractérisé en ce qu'**il comporte un corps (3), une face de distribution (5) apte à être reliée au distributeur pneumatique (2), une face d'alimentation (4) apte à être reliée à l'embase d'alimentation (1) et un élément d'obturation (6) apte à occuper une position ouverte où la face de distribution (5) est en communication fluide avec la face d'alimentation (4), et une position fermée où la face de distribution (5) n'est pas en communication fluide avec la face d'alimentation (4).

3. Dispositif isolateur de pression (D) selon la revendication 2, **caractérisé en ce que** l'élément d'obturation (6) est une sphère traversée par un orifice cylindrique (15) apte à pivoter autour d'un axe orthogonal à l'axe de l'orifice cylindrique (15).

4. Dispositif isolateur de pression (D) selon la revendication 2 ou 3, **caractérisé en ce que** la surface latérale de l'élément d'obturation comporte une fente (6a) apte à coopérer avec une commande (19) montée pivotante par rapport au corps (3).

5. Dispositif isolateur de pression (D) selon la revendication 2, 3 ou 4, **caractérisé en ce que** l'élément d'obturation (6) comporte un orifice d'échappement (16) apte, lorsque le dispositif isolateur de pression (D) est en position fermée, à mettre en communication les orifices d'utilisation de la face d'alimentation (5) avec une sortie d'échappement (17).

6. Dispositif isolateur de pression (D) selon la revendication 1, **caractérisé en ce que** la plaque (23) comprend une ouverture (25) permettant la pose d'un dispositif de sécurité.

## Patentansprüche

1. Pneumatische oder elektropneumatische Verteilungsanordnung (E), die mindestens einen auf einem Verteilungssockel (1) angebrachten pneumatischen oder elektropneumatischen Verteiler (2) umfasst und die mindestens eine Druckisolierungsvorrichtung (D) umfasst, die dazu ausgelegt ist, den Zuführungsdruck des Verteilers (2) des Sockels (1) zu isolieren, **gekennzeichnet dadurch, dass** eine Sperrvorrichtung (23) zum Blockieren der Druckisoliervorrichtung (D) in offener Stellung oder in geschlossener Stellung vorgesehen ist, wobei die Blockiervorrichtung durch eine Platte (23) gebildet wird, die verschiebbar bezüglich des Körpers (3) geführt wird, wobei die Platte einen Finger (24) umfasst, der dazu ausgelegt ist, mit auf der Steuerung (19) vorgesehenen Aufnahmen (21a, 21b) zusammenzuwirken.

2. Druckisoliervorrichtung (D) für eine Anordnung nach Anspruch 1, **gekennzeichnet dadurch, dass** sie einen Körper (3), eine Verteilungsseite (5), die dazu ausgelegt ist, mit dem pneumatischen Verteiler (2) verbunden zu sein, eine Zuführungsseite (4), die dazu ausgelegt ist, mit dem Zuführungssockel (1) verbunden zu sein, und ein Verschlusselement (6) umfasst, das dazu ausgelegt ist, eine offene Position, in der sich die Verteilungsseite (5) in Strömungskommunikation mit der Zuführungsseite (4) befindet, und eine geschlossene Position, in der die Verteilungsseite (5) sich nicht in Strömungskommunikation mit der Zuführungsseite (4) befindet, einzunehmen.

3. Druckisoliervorrichtung (D) nach Anspruch 2, **gekennzeichnet dadurch, dass** das Verschlusselement (6) eine Kugel ist, die von einer zylindrischen Öffnung (15) durchstoßen wird, die dazu ausgelegt ist, sich um eine zur Achse der zylindrischen Öffnung (15) senkrechten Achse zu drehen.

4. Druckisoliervorrichtung (D) nach Anspruch 2 oder 3, **gekennzeichnet dadurch, dass** die Seitenfläche des Verschlusselements einen Spalt (6a) aufweist, der dazu ausgelegt ist, mit einer Steuerung (19) zusammenzuwirken, die drehbar bezüglich des Körpers (3) angebracht ist.

5. Druckisoliervorrichtung (D) nach Anspruch 2, 3 oder 4, **gekennzeichnet dadurch, dass** das Verschlusselement (6) eine Ausstoßöffnung (16) aufweist, die dazu ausgelegt ist, wenn sich die Druckisoliervorrichtung (D) in der geschlossenen Stellung befindet, die von der Zuführungsseite (5) verwendeten Öffnungen mit einem Ausstoßauslass (17) in Kommunikation zu setzen.

6. Druckisoliervorrichtung (D) nach Anspruch 1, **gekennzeichnet dadurch, dass** die Platte (23) eine Öffnung (25) umfasst, die das Einsetzen einer Sicherheitsvorrichtung ermöglicht.

## Claims

1. Pneumatic or electropneumatic distribution assembly (E) comprising at least one pneumatic or electropneumatic distributor (2) mounted on a distribution base (1), comprising at least one pressure isolator device (D) able to isolate the supply pressure of the distributor (2) from the base (1), **characterized in that** a locking device (23) is provided for locking the pressure isolator device (D) in the open position or in the closed position, the locking device consisting of a plate (23) guided in translation relative to the body (3) comprising a finger (24) adapted to cooperate with housings (21a, 21b) provided on the control (19).

2. Pressure isolator device (D) for the assembly according to claim 1, **characterized in that** it includes a body (3), a distribution face (5) adapted to be connected to the pneumatic distributor (2), a supply face (4) adapted to be connected to the supply base (1) and a closure element (6) capable of occupying an open position in which the distribution face (5) is in fluid communication with the supply face (4) and a closed position in which the distribution face (5) is not in fluid communication with the supply face (4).

3. Pressure isolator device (D) according to claim 2, **characterized in that** the closure element (6) is a sphere with a cylindrical hole (15) through it able to pivot about an axis orthogonal to the axis of the cylindrical hole (15).

4. Pressure isolator device (D) according to claim 2 or 3, **characterized in that** the lateral surface of the closure element includes a slot (6a) adapted to cooperate with a control (19) pivotally mounted relative to the body (3).

5. Pressure isolator device (D) according to claim 2, 3 or 4, **characterized in that** the closure element (6) includes an exhaust hole (16) adapted to establish communication between the usage holes of the supply face (5) and an exhaust outlet (17) when the pressure isolator device (D) is in the closed position.

6. Pressure isolator device (D) according to claim 1, **characterized in that** the plate (23) includes an opening (25) for fitting a safety device.
